# EUROPÄISCHE PATENTSCHRIFT

(11) **EP 0 952 448 B1**
(45) Veröffentlichungstag und Bekanntmachung des Hinweises auf die Patenterteilung: **24.03.2004**
(21) Anmeldenummer: 98107439.6
(22) Anmeldetag: 23.04.1998
(51) Int. Cl.: G01N 27/28

(54) **Aufnahmeeinrichtung für einen Sensor zur Messung fluider Medien in der Prozesstechnik**
Sensor holder arrangement for measuring fluids in processing
Dispositif de retenue pour capteur de mesure des fluides de traitement

(43) Veröffentlichungstag der Anmeldung: 27.10.1999
(73) Patentinhaber: Endress + Hauser Conducta Gesellschaft für Mess- und Regeltechnik mbH + Co.KG., D-70839 Gerlingen (DE)
(72) Erfinder: Babel, Wolfgang, Dr., 71263 Weil der Stadt (DE); Wittmer, Detlef, Dr., 75433 Maulbronn (DE)
(74) Vertreter: Dreiss, Fuhlendorf, Steimle & Becker

(56) Entgegenhaltungen:
- EP-A- 0 414 032
- EP-A- 0 414 033
- WO-A-92/01218
- DE-A- 2 555 170
- DE-A- 3 834 240
- PATENT ABSTRACTS OF JAPAN vol. 008, no. 125 (P-279), 12. Juni 1984 (1984-06-12) & JP 59 030057 A (TOUA DENPA KOGYO KK), 17. Februar 1984 (1984-02-17)

## Beschreibung

Die Erfindung betrifft eine Aufnahmeeinrichtung für mindestens einen wechselbaren Sensor zur Messung fluider Medien in der Prozesstechnik, zur Verwendung als Eintaucharmatur oder als Durchflussarmatur. Im ersten Fall wird der Sensor in ein zumeist abgeschlossenes Behältnis, welches das zu messende fluide Medium beinhaltet, von oben eingetaucht. Im zweiten Fall wird in eine das fluide strömende Medium führende Leitung oder in eine hierzu parallele Zweigleitung ein Durchflussbehälter angeschlossen, in welchen der Sensor dichtend eingesetzt werden kann. Bekannte Aufnahmeeinrichtungen sind jeweils für den speziellen Einsatzfall unterschiedlich ausgebildet. Es muss daher eine größere Anzahl von Aufnahmeeinrichtungen für die jeweiligen Sensoren, bei denen es sich bspw. um den pH-Wert, die elektrische Leitfähigkeit oder den Trübungsgrad des fluiden Mediums messende Sensoren handeln kann, bereitgehalten werden.

EP-A-0 414 032 zeigt eine Aufnahmeeinrichtung für einen Sensor zur Verwendung als Eintaucharmatur mit einem eine Messelektrode des Sensors aufnehmenden Elektrodenhalter, wobei an einem Gehäuse des Elektrodenhalters ein erstes mechanisches Befestigungsmittel vorgesehen ist, mittels dessen die Aufnahmeeinrichtung über ein Halterohr als Verlängerungsstück an einer Durchgangsöffnung eines Behältnisses als Eintaucharmatur montierbar und dabei innerhalb des Behältnisses anordenbar ist.

DE-A-38 34 240 und WO 92/01218 zeigen Aufnahmeeinrichtungen für einen Sensor zur Verwendung als Durchflussarmatur, mit einem Messelektroden des Sensors aufnehmenden Elektrodenhalter, wobei an einem Gehäuseteil der Aufnahmeeinrichtung ein mechanisches Befestigungsmittel vorgesehen ist, mittels dessen die Aufnahmeeinrichtung als Durchflussarmatur dichtend an einem von dem zu messenden fluiden Medium durchströmbaren Durchflussbehälter montierbar ist, indem das Befestigungsmittel von einem radial äußeren Stützflansch gebildet ist, an dem eine an dem Durchflussbehälter anschraubbare das Gehäuseteil konzentrisch umgebende Überwurfmutter abstützbar ist, mit der das Gehäuseteil am Durchflussbehälter montierbar ist und dabei nur mit seinem elektrodenseitigen Teil jenseits des Stützflanschs in einen Aufnahmeraum des Durchflussbehälters eingreift.

Hiervon ausgehend liegt der vorliegenden Erfindung die Aufgabe zugrunde, eine Aufnahmeeinrichtung der eingangs beschriebenen Art bereitzustellen, die universeller und damit kostengünstiger eingesetzt werden kann. Diese Aufgabe wird durch eine Aufnahmeeinrichtung mit den Merkmalen des Anspruchs 1 gelöst.

Mit der Erfindung wird also vorgeschlagen, die Aufnahmeeinrichtung so auszubilden, dass sie sowohl als Eintaucharmatur wie auch als Durchflussarmatur eingesetzt werden kann, indem für beide Verwendungszwecke lösbare mechanische Befestigungsmittel vorgesehen sind. Es wird also in gewisser Weise eine modulare Bauweise der Aufnahmeeinrichtung vorgeschlagen.

In der Prozesstechnik verwandte Sensoreinrichtungen der vorstehend erwähnten Art umfassen Messelektroden, deren freies Ende mit dem zu messenden fluiden Medium in Kontakt gebracht wird. Die Messelektroden werden üblicherweise in einem als Elektrodenhalter zu bezeichnenden Teil der Aufnahmeeinrichtung gehalten und über den Elektrodenhalter mit dem fluiden Medium in Kontakt gebracht. Es erweist sich als besonders vorteilhaft, wenn die nach der Erfindung vorgesehenen ersten und zweiten mechanischen Befestigungsmittel am Gehäuse des Elektrodenhalters vorgesehen sind. Solchenfalls kann ein und derselbe Elektrodenhalter für den Einsatz des Sensors in einer Eintaucharmatur wie auch in einer Durchflussarmatur verwendet werden.

Um eine vorbestimmte, vorzugsweise innerhalb gewisser Grenzen einstellbare Eintauchtiefe bei der Verwendung des Sensors in einer Eintaucharmatur einstellen zu können, erweist es sich als vorteilhaft, wenn die Aufnahmeeinrichtung ein nach außerhalb der Öffnung führendes Verlängerungsstück umfasst, welches elektrische Anschlussleitungen der Messelektroden zu einer Auswerte- und Steuerelektronik führt und den Elektrodenhalter in der vorbestimmten Eintauchtiefe hält. Solchenfalls dient das erste Befestigungsmittel am Elektrodenhalter zum lösbaren Verbinden des Elektrodenhalters mit dem Verlängerungsstück, bei dem es sich vorzugsweise um ein Verlängerungsrohr handelt.

Bei den Befestigungsmitteln handelt es sich vorzugsweise um Gewindemittel oder damit zusammenwirkende Gegenmittel oder um bajonettartige Verschlussmittel. Die einen und/oder anderen Befestigungsmittel können vorzugsweise verrastend oder schnappend in eine Formschlusshalteverbindung mit komplementär ausgebildeten Befestigungsgegenmitteln gebracht werden.

Weitere Merkmale, Einzelheiten und Vorteile der Erfindung ergeben sich aus der zeichnerischen Darstellung und nachfolgenden Beschreibung einer bevorzugten Ausführungsform der erfindungsgemäßen Aufnahmeeinrichtung. In der Zeichnung zeigt:
- Figur 1: eine explosionsartige Darstellung einer Durchflussarmatur;
- Figur 2: einen Längsschnitt durch eine erfindungsgemäße Eintaucharmatur;
- Figur 3: eine Seitenansicht der Eintaucharmatur nach Figur 2;
- Figur 4: eine perspektivische Ansicht der Eintaucharmatur nach Figuren 2 und 3 in verkleinertem Maßstab,
- Figur 5: eine perspektivische Ansicht eines Elektrodenhalters der Armaturen nach den Figuren 1 bis 4; und
- Figur 6: eine Seitenansicht des Elektrodenhalters nach Figur 5.

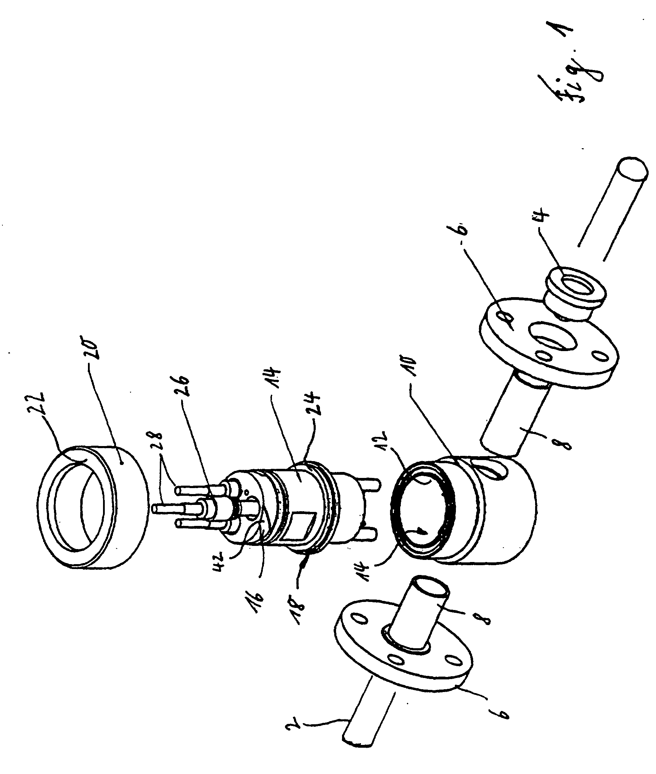

Figur 1 zeigt eine perspektivische Darstellung einer Durchflussarmatur, wobei mit dem Bezugszeichen 2 eine ein zu messendes fluides Medium führende Leitung bezeichnet ist. In der Leitung 2 ist über Bundbuchsen 4 und zwei Losflansche 6 und daran anschließende Rohrstücke 8 ein Durchflussbehälter 10 angeordnet. Der Durchflussbehälter 10 bildet einen Aufnahmeraum 12 für einen Elektrodenhalter 14, der kartuschenartig ausgebildet ist und in eine Einsetzöffnung 14 des Durchflussbehälters 10 einsetzbar ist.

Der bspw. aus Polypropylen oder Polyvinylidendifluorid oder auch aus Stahl bestehende Elektrodenhalter 14 umfasst ein erstes mechanisches Befestigungsmittel 16 sowie ein zweites mechanisches Befestigungsmittel 18. Das erste mechanische Befestigungsmittel 16 ist für die Verwendung des Elektrodenhalters 14 in einer Durchflussarmatur nicht von Bedeutung. Lediglich das zweite mechanische Befestigungsmittel 18 wird dazu verwandt, den Elektrodenhalter 14 in dem Aufnahmeraum 12 und dichtend an dem Durchflussbehälter 10 zu halten. Hierfür wird eine Überwurfmutter 20 verwandt, welche den Elektrodenhalter 14 konzentrisch umgibt und sich mit einem radial inneren Flansch 22 auf einem radial äußeren Stützflansch 24, der Teil des zweiten mechanischen Befestigungsmittels 18 ist, abstützt. Die Überwurfmutter 20 umfasst ein nicht dargestelltes Gewinde, welches in ein ebenfalls nicht dargestelltes Gegengewinde an dem Durchflussbehälter 10 einschraubbar ist.

Elektrische Anschlussleitungen 26 der im Inneren des Elektrodenhalters 14 fixierten Messelektroden des Sensors sind mit dem Bezugszeichen 28 versehen.

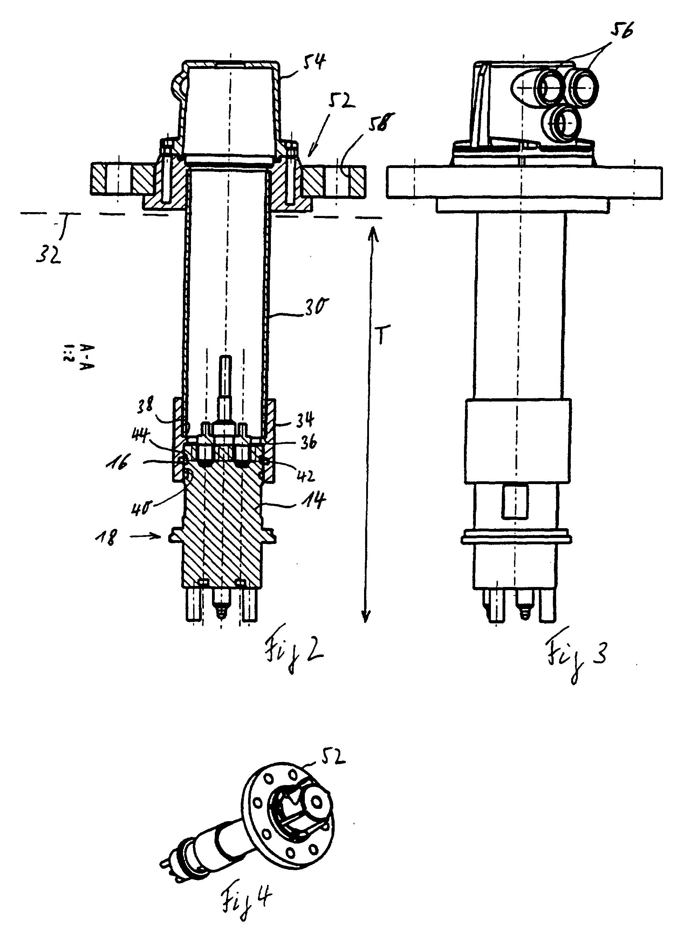

Figur 2 zeigt die Verwendung desselben Elektrodenhalters 14 in einer Eintaucharmatur. In diesem Fall ist das zweite mechanische Befestigungsmittel 18 außer Funktion und das erste mechanische Befestigungsmittel 16 dient zum lösbaren Verbinden des Elektrodenhalters 14 und eines Verlängerungsstücks 30, welches nach außerhalb einer angedeuteten Behälterwand 32 führt und den Elektrodenhalter 14 in einer bestimmten Eintauchtiefe T hält. Das rohrförmige Verlängerungsstück 30 weist an seinem dem Elektrodenhalter 14 zugewandten Ende ein buchsenförmiges Anschlussstück 34 auf, welches das freie Ende des Verlängerungsstücks 30 konzentrisch umgibt und mit dessen Außenseite verklebt ist. Dabei stützt sich die Stirnseite 36 des Verlängerungsstücks 30 gegen einen ringförmigen radial inneren Vorsprung 38 des Verbindungsstücks 34 ab. Die innere Wandung 40 des freien Endes des Zwischenstücks 34 ist so ausgebildet, dass ein Ende des Elektrodenhalters 14 im Wesentlichen spielfrei in das freie Ende einsteckbar ist, wobei das Befestigungsmittel 16 in Form einer zur Stirnseite des Elektrodenhalters 14 offenen Nut einen radial inneren Vorsprung 44, der von der inneren Wandung 40 des Zwischenstücks 34 vorsteht, aufnimmt. Durch Verdrehen des Elektrodenhalters 14 gegenüber dem Zwischenstück 34 wird ein Bajonettverschluss gebildet.

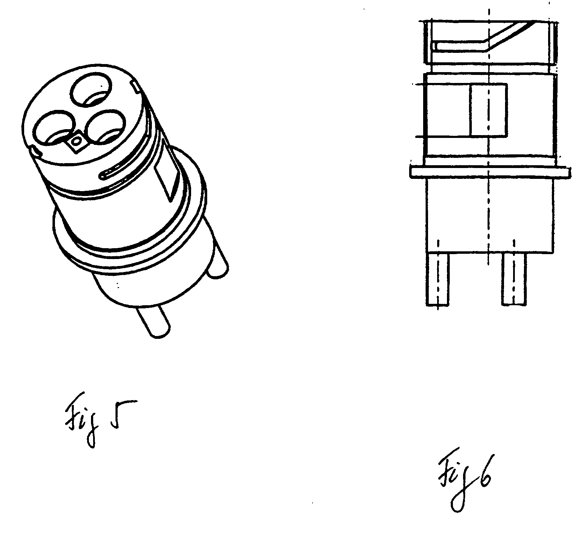

Die Figuren 5 und 6 zeigen den Elektrodenhalter 14; man erkennt dass die Nut einen ersten zur Eintauchrichtung 46 geneigten Nutabschnitt 48 und einen daran anschließenden konzentrisch zur Eintauchrichtung bzw. in Umfangsrichtung des Elektrodenhalters 14 verlaufenden Nutabschnitt 50 aufweist, in denen der Vorsprung 44 des Verbindungsstücks 34 kulissenartig gleitet.

An der dem Elektrodenhalter 14 gegenüberliegenden Seite des Verlängerungsstücks 30 ist eine Flanschplatte 52 vorgesehen, die ein domförmiges Gehäuse 54 trägt, durch dessen Öffnungen 56 die elektrischen Anschlussleitungen 26 des Sensors zur Auswerteelektronik geführt werden. Die Flanschplatte 52 umfasst Schraubendurchgangsöffnungen 58, mit denen die Armatur an der Außenseite der Behälterwand 32 fixiert werden kann.

## Patentansprüche

1. Aufnahmeeinrichtung für mindestens einen wechselbaren Sensor zur Messung fluider Medien in der Prozesstechnik, zur Verwendung als Eintaucharmatur oder als Durchflussarmatur, mit einem Messelektroden des Sensors aufnehmenden Elektrodenhalter (14), wobei an einem Gehäuse des Elektrodenhalters (14) ein erstes mechanisches Befestigungsmittel (16) vorgesehen ist, mittels dessen die Aufnahmeeinrichtung an einer Durchgangsöffnung eines Behältnisses (32) als Eintaucharmatur montierbar und dabei innerhalb des Behältnisses anordenbar ist, und wobei an dem Gehäuse des Elektrodenhalters (14) ferner ein zweites mechanisches Befestigungsmittel (18) vorgesehen ist, mittels dessen die Aufnahmeeinrichtung als Durchflussarmatur dichtend an einem von dem zu messenden fluiden Medium durchströmbaren Durchflussbehälter (10) montierbar ist, indem das zweite Befestigungsmittel (18) von einem radial äußeren Stützflansch (24) gebildet ist, an dem eine an dem Durchflussbehälter (10) anschraubbare den Elektrodenhalter (14) konzentrisch umgebende Überwurfmutter (22) abstützbar ist, mit der der Elektrodenhalter (14) am Durchflussbehälter (10) montierbar ist und dabei nur mit seinem elektrodenseitigen Teil jenseits des Stützflanschs (24) in einen Aufnahmeraum (12) des Durchflussbehälters (10) eingreift.

2. Aufnahmeeinrichtung nach Anspruch 1, **dadurch gekennzeichnet, dass** das erste Befestigungsmittel (16) zum Anschluss eines nach außerhalb der Öffnung führenden Verlängerungsstücks (30) ausgebildet ist, welches elektrische Anschlussleitungen des Sensors zu einer Auswerte und Steuerelektronik führt und den Elektrodenhalter (14) in einer vorbestimmten, insbesondere wählbaren Eintauchtiefe (T) hält.

3. Aufnahmeeinrichtung nach Anspruch 1 oder 2, **dadurch gekennzeichnet, dass** die Befestigungsmittel (16, 18) Gewindemittel oder damit zusammenwirkende Gegenmittel oder bajonettartige Verschlussmittel (42, 44) umfassen.

4. Aufnahmeeinrichtung nach Anspruch 1 oder 2, **dadurch gekennzeichnet, dass** die Befestigungsmittel (16) verrastend oder schnappend in eine Formschlusshalteverbindung mit komplementär ausgebildeten Befestigungsgegenmitteln (42, 44) bringbar sind.

5. Aufnahmeeinrichtung nach einem der vorstehenden Ansprüche, **dadurch gekennzeichnet, dass** der Elektrodenhalter (14) kartuschenartig ausgebildet ist.

6. Aufnahmeeinrichtung nach Anspruch 5, **dadurch gekennzeichnet, dass** das erste Befestigungsmittel einen ein der Stirnseite des kartuschenartigen Elektrodenhalters (14) mündenden Nutabschnitt umfasst, in welchen ein Befestigungsgegenmittel in Eintauchrichtung einführbar ist.

7. Aufnahmeeinrichtung nach Anspruch 6, **dadurch gekennzeichnet, dass** der Nutabschnitt zur Eintauchrichtung geneigt verläuft und in einen zur Eintauchrichtung konzentrischen in Umfangsrichtung des kartuschenartigen Elektrodenhalters (14) verlaufenden Nutabschnitt übergeht.

## Claims

1. Holder arrangement for at least one interchangeable sensor for measuring fluid media in process engineering, for use as an immersion assembly or as a flow assembly, comprising an' electrode holder (14) holding measuring electrodes of the sensor, a first mechanical fastening means (16) being provided on a housing of the electrode holder (14) and by means of which the holder arrangement being mountable as an immersion assembly on a passage of a container (32) and being capable of being arranged inside the container, and furthermore a second mechanical fastening means (18) being provided on the housing of the electrode holder (14) and by means of which the holder arrangement being mountable as a flow assembly with a seal on a flow-through container (10) through which the fluid medium to be measured can flow, in that the second fastening means (18) is formed by a radially outer support flange (24) on which a lock nut (22) which can be screwed to the flow-through container (10) and concentrically surrounds the electrode holder (14) can be supported, by means of which lock nut the electrode holder (14) can be mounted on the flow-through container (10), and only its part on the electrode side, the other side of the support flange (24), enters a holding space (12) of the flow-through container (10).

2. Holder arrangement according to Claim 1, **characterized in that** the first fastening means (16) is formed for connection of an extension piece (30) which leads outside the opening, carries electrical connecting cables of the sensor to evaluation and control electronics and keeps the electrode holder (14) at a predetermined, in particular selectable immersion depth (T).

3. Holder arrangement according to Claim 1 or 2, **characterized in that** the fastening means (16, 18) comprise thread means or counterparts cooperating therewith or bayonet fitting means (42, 44).

4. Holder arrangement according to Claim 1 or 2, **characterized in that** the fastening means (16) can be made to lock or snap in to give an interlocking connection with complementary fastening counterparts (42, 44).

5. Holder arrangement according to any of the preceding Claims, **characterized in that** the electrode holder (14) is in the form of a cartridge.

6. Holder arrangement according to Claim 5, **characterized in that** the first fastening means comprises a groove section which opens in the end face of the cartridge-like electrode holder (14) and into which a fastening counterpart can be introduced in the immersion direction.

7. Holder arrangement according to Claim 6, **characterized in that** the groove section is inclined towards the immersion direction and is transformed into a groove section concentric with the immersion direction and running in the circumferential direction of the cartridge-like electrode holder (14).

## Revendications

1. Dispositif de logement pour au moins un capteur interchangeable pour mesurer des milieux fluides dans la technique des procédés, destiné à être utilisé comme accessoire de tuyauterie immergé ou accessoire de tuyauterie à écoulement, avec un support d'électrodes (14) logeant des électrodes de mesure du capteur, un premier moyen de fixation mécanique (16) étant prévu sur un boîtier du support d'électrodes (14), au moyen duquel le dispositif de logement peut être monté à une ouverture de passage d'un récipient (32) en tant qu'accessoire de tuyauterie immergé et pouvant alors être disposé à l'intérieur du récipient, et un deuxième moyen de fixation mécanique (18) étant en outre prévu sur le boîtier du support d'électrodes (14), au moyen duquel le dispositif de logement en tant qu'accessoire de tuyauterie à écoulement peut être monté de manière étanche sur un récipient à écoulement (10) pouvant être traversé par le milieu fluide à mesurer, le deuxième moyen de fixation (18) étant formé par une bride d'appui (24) extérieure dans le sens radial, sur laquelle peut s'appuyer un écrou-raccord (22) entourant de manière concentrique le support d'électrodes (14), pouvant être vissé sur le récipient à écoulement (10), et avec lequel le support d'électrodes (14) peut être monté sur le récipient à écoulement (10), et s'insérant seulement avec sa partie côté électrodes au-delà de la bride d'appui (24) dans un espace de logement (12) du récipient à écoulement (10).

2. Dispositif de logement selon la revendication 1, **caractérisé en ce que** le premier moyen de fixation (16) est formé pour le raccordement d'une pièce de prolongation (30) conduisant à l'extérieur de l'ouverture, qui guide des lignes de raccordement électriques du capteur vers une électronique d'évaluation et de commande et maintient le support d'électrodes (14) à une profondeur d'immersion (T) prédéterminée, en particulier pouvant être choisie.

3. Dispositif de logement selon la revendication 1 ou 2, **caractérisé en ce que** les moyens de fixation (16, 18) comprennent des moyens filetés ou des moyens opposés coopérant avec ceux-ci ou des moyens de fermeture du type à baïonnette (42, 44).

4. Dispositif de logement selon la revendication 1 ou 2, **caractérisé en ce que** les moyens de fixation (16) peuvent être amenés par enclenchement ou encliquetage à former une liaison de maintien solidaire avec correspondance de forme avec des moyens de fixation opposés formés de manière complémentaire (42, 44).

5. Dispositif de logement selon l'une quelconque des revendications précédentes, **caractérisé en ce que** le support d'électrodes (14) est formé à la manière d'une cartouche.

6. Dispositif de logement selon la revendication 5, **caractérisé en ce que** le premier moyen de fixation comprend un segment de rainure débouchant vers le côté d'extrémité du support d'électrodes (14) en forme de cartouche, dans lequel un moyen de fixation opposé peut être introduit dans la direction d'immersion.

7. Dispositif de logement selon la revendication 6, **caractérisé en ce que** le segment de rainure est orienté incliné par rapport à la direction d'immersion et passe à un segment de rainure concentrique par rapport à la direction d'immersion, s'étendant dans le sens circonférentiel du support d'électrodes (14) en forme de cartouche.
